# EUROPEAN PATENT APPLICATION

(11) **EP 4 421 892 A1**
(43) Date of publication of application: **28.08.2024**
(21) Application number: 23217413.6
(22) Date of filing: 18.12.2023
(51) Int. Cl.: H01M 4/04, H01M 50/533, B23K 26/38, H01M 4/70

(54) **METHOD FOR FORMING AN ELECTRODE FOR ELECTROCHEMICAL CELLS AND ELECTRODE FOR ELECTROCHEMICAL CELLS**

(30) Priority: 27.02.2023 IT 202300003459; 27.02.2023 IT 202300003456
(71) Applicant: G.D S.p.A., 40133 Bologna (BO) (IT)
(72) Inventor: SPIRITO, Gilberto, I-40133 Bologna (IT)
(74) Representative: Porta & Consulenti Associati S.p.A.

(57) **Abstract**

A method for forming an electrode for electrochemical cells comprises arranging an electrode sheet (11) having a thickness, a length (L) and a height (H), wherein the length (L) is measured along a longitudinal direction, the height (H) is measured along a transverse direction and the thickness is measured along a direction perpendicular to the longitudinal direction and the transverse direction, the electrode sheet (11) having a longitudinal free edge (12a); cutting a plurality of tab notches (19) on the electrode sheet (11) in a first portion (15) of the electrode sheet (11) extending transversely from the free edge (12a), wherein each tab notch (11) extends from a transversely outer end (19b) to a transversely inner end (19a); cutting a plurality of auxiliary notches (20) on the electrode sheet (11) in the first portion (15) of the electrode sheet (11), wherein each auxiliary notch (20) extends in a longitudinal direction and contacts a single tab notch (19) between the transversely outer end (19b) and the transversely inner end (19a) of the tab notch (19).

## Description

The present invention refers to a method for forming an electrode for electrochemical cells and to an electrode for electrochemical cells.

The present invention is used in a process for making electrochemical cells, for example secondary electrochemical cells, comprising electrodes separated from each other by a dielectric separator.

The electrochemical cells can be produced by winding two electrode sheets, with a dielectric separator foil interposed between the two electrode sheets. The two electrode sheets act as anode and cathode for the electrochemical cell.

Usually, each electrode sheet is obtained by depositing a layer of active material for electrodes on one surface or on both surfaces of a current-collecting metal sheet. By choosing a suitable combination of active material for electrodes and of material of the metal sheet, it is possible to obtain positive electrode sheets and negative electrode sheets.

The metal sheets are not completely coated with active material for electrodes, but no active material for electrodes is applied to both free edges or on only one free edge of the metal sheet.

The electrode sheets are wound in such a way that, at one end of the electrochemical cell, a first electrode sheet protrudes beyond the separator foil (to define an electrical pole of the electrochemical cell) and in such a way that the separator foil protrudes beyond the second electrode sheet (to avoid short circuits between the two electrode sheets). Similarly, at the second end of the electrochemical cell, the second electrode sheet protrudes beyond the separator foil and the separator foil protrudes beyond the first electrode sheet.

Each part of the electrode sheet protruding with respect to the separator foil is not coated with active material and is used to define an electrical pole of the electrochemical cell. In particular, the part of each electrode sheet protruding with respect to the separator foil must be folded towards a central axis of the electrochemical cell so as to define a (more or less regular) electric pole surface of the electrochemical cell to which an electric pole plate can be connected or which can be connected to a battery pole.

To enable the protruding part of electrode sheet to be folded correctly, a plurality of tabs are obtained on this part of the electrode sheet (which substantially coincides with the free edge of the metal sheet on which no active material for electrodes is applied) before the two electrode sheets are wound together with the separator foil.

In the Applicant's experience, in a process for making electrochemical cells, subsequent to forming the tabs, the electrode sheets are transported travelling on transport rollers and return rollers up to a winding station where the electrode sheets are wound together.

In the Applicant's experience, during such transport operations the electrode sheets are subjected to tensile forces that create stresses within the electrode sheets.

The Applicant has noted that such stresses could trigger cracks, tears or fractures in the electrode sheets at the tabs.

The Applicant has in fact verified that at the points of the electrode sheets from which the notches defining the tabs depart, discontinuity points in the sheet material where stress concentrations occur are created. At such points, in accordance with the Applicant's experience, fractures in the electrode sheet material can be triggered, with the consequent formation of cracks or tears.

In other words, the Applicant has observed that at one or more points from which the notches depart, the tensile forces to which the electrode sheets are subjected may cause a kind of elongation of the notch caused by the tear of the electrode sheet material precisely at the point from which the original notch departs.

The Applicant considers that in order to obtain reliable and repeatable processes for making electrochemical cells, a need is felt to be able to transport the electrode sheets on which the tabs are cut while preserving the integrity of the tabs themselves and of the electrode sheets.

The Applicant has perceived that it would be advantageous to be able to distribute over a larger surface area the stresses concentrated at the points from which the notches defining the tabs depart, so as to avoid or diminish the possibility of fractures, tears or cracks occurring in the electrode sheet material during the transport thereof.

The Applicant has found that by arranging notches transverse to the tab notches (i.e. to the notches defining the tabs) in such a way that each transverse notch passes through a corresponding tab notch without, however, reaching another tab notch, it would be possible to significantly mitigate the stress concentration at the electrode sheet points from which the tab notches depart.

The present invention therefore concerns, in a first aspect thereof, a method for forming an electrode for electrochemical cells.

Preferably, it is provided to arrange an electrode sheet having a thickness, a length and a height, wherein the length is measured along a longitudinal direction, the height is measured along a transverse direction and the thickness is measured along a direction perpendicular to the longitudinal direction and the transverse direction.

Preferably, said electrode sheet has a longitudinal free edge.

Preferably, it is provided to cut a plurality of tab notches on said electrode sheet.

Preferably, said tab notches are cut in a first portion of electrode sheet extending transversely from said free edge.

Preferably, each tab notch extends from a transversely outer end to a transversely inner end.

Preferably, it is provided to cut a plurality of auxiliary notches on said electrode sheet in said first portion of the electrode sheet.

Preferably, each auxiliary notch extends in the longitudinal direction and contacts a single tab notch between the transversely outer end and the transversely inner end of the tab notch.

The present invention concerns, in a second aspect thereof, an electrode for electrochemical cells.

Preferably, there is provided an electrode sheet having a thickness, a length and a height, wherein the length is measured along a longitudinal direction, the height is measured along a transverse direction and the thickness is measured along a direction perpendicular to the longitudinal direction and the transverse direction.

Preferably, said electrode sheet has a longitudinal free edge.

Preferably, there is provided a plurality of tab notches obtained on said electrode sheet.

Preferably, said tab notches are placed in a first portion of electrode sheet extending transversely from said free edge.

Preferably, each tab notch extends from a transversely outer end to a transversely inner end.

Preferably, there is provided a plurality of auxiliary notches obtained on said electrode sheet in said first portion of electrode sheet.

Preferably, each auxiliary notch extends in the longitudinal direction and contacts a single tab notch between the transversely outer end and the transversely inner end of the tab notch.

In this description and in the subsequent claims, the term "longitudinal" means a direction that is substantially parallel to a direction of major extension of an electrode sheet. Considering an electrode sheet as a plate whose thickness is remarkably thin, a longitudinal direction extends between the two opposite and furthest free edges of such a plate.

In this description and in the subsequent claims, the term "transverse" means a direction contained in a plane containing a longitudinal direction and substantially perpendicular to a longitudinal direction. Considering an electrode sheet as a plate whose thickness is remarkably thin, a transverse direction extends between the two opposite and closest free edges of such a plate.

In this description and in the subsequent claims, the terms "transversely outer" and "transversely inner" mean, respectively, positions along a transverse direction that are closer to and more distal from a longitudinal free edge.

The present invention can have at least one of the preferred features described below. These characteristics may be present singly or in combination with each other, unless expressly stated otherwise, in both the method for forming an electrode for electrochemical cells and in the electrode for electrochemical cells of the present invention.

Preferably, the thickness of the electrode sheet is at least two orders of magnitude less than the dimension in the transverse direction of the electrode sheet.

Preferably, the dimension in the transverse direction of the electrode sheet is at least one order of magnitude smaller than the dimension in the longitudinal direction of the electrode sheet.

Preferably, the first portion of electrode sheet is not coated with active material for electrodes.

Preferably, said electrode sheet comprises a second portion of electrode sheet transversely consecutive to said first portion of electrode sheet.

Preferably, said second portion of the electrode sheet is coated with active material for electrodes.

Preferably, the plurality of tab notches is made entirely in said first portion of electrode sheet.

Preferably, cutting a plurality of tab notches comprises cutting a plurality of tab notches parallel to each other and spaced apart by respective notch distances.

Preferably, the notch distances are measured in the longitudinal direction.

Preferably, the notch distances of the plurality of tab notches are all equal to each other.

Preferably, cutting a plurality of auxiliary notches comprises cutting each auxiliary notch with a first portion extending from a corresponding tab notch towards a first adjacent tab notch.

Preferably, the first portion of each auxiliary notch does not reach a first adjacent tab notch.

Preferably, cutting a plurality of auxiliary notches comprises cutting each auxiliary notch with additionally a second portion extending from a corresponding tab notch towards a second adjacent tab notch.

Preferably, the second portion of each auxiliary notch extends longitudinally on the opposite side with respect to the first portion of the respective auxiliary notch.

Preferably, the second portion of each auxiliary notch does not reach a first adjacent tab notch.

Preferably, the first portion of each auxiliary notch is connected directly to the second portion of the respective auxiliary notch.

Preferably, each first portion of auxiliary notch has a longitudinal length, measured from a corresponding tab notch towards the first adjacent tab notch, between 10% and 90% of the corresponding notch distance.

Preferably, each first portion of auxiliary notch has a longitudinal length, measured from a corresponding tab notch towards the first adjacent tab notch, between 10% and 80% of the corresponding notch distance.

Preferably, each first portion of auxiliary notch has a longitudinal length, measured from a corresponding tab notch towards the first adjacent tab notch, between 10% and 70% of the corresponding notch distance.

Preferably, each first portion of auxiliary notch has a longitudinal length, measured from a corresponding tab notch towards the first adjacent tab notch, between 10% and 60% of the corresponding notch distance.

Preferably, each first portion of auxiliary notch has a longitudinal length, measured from a corresponding tab notch towards the first adjacent tab notch, between 10% and 49% of the corresponding notch distance.

In this case, preferably each second portion of auxiliary notch has a longitudinal length, measured from a corresponding tab notch towards the second adjacent tab notch, between 10% and 49% of the corresponding notch distance.

Preferably, the sum of the longitudinal length of each first portion of auxiliary notch and of the longitudinal length of the corresponding second portion of auxiliary notch is between 10% and 90% of the notch distance between two adjacent tab notches.

Preferably, the sum of the longitudinal length of each first portion of auxiliary notch and of the longitudinal length of the corresponding second portion of auxiliary notch is between 10% and 80% of the notch distance between two adjacent tab notches.

Preferably, the sum of the longitudinal length of each first portion of auxiliary notch and of the longitudinal length of the corresponding second portion of auxiliary notch is between 10% and 70% of the notch distance between two adjacent tab notches.

Preferably, the sum of the longitudinal length of each first portion of auxiliary notch and of the longitudinal length of the corresponding second portion of auxiliary notch is between 10% and 60% of the notch distance between two adjacent tab notches.

Preferably, the sum of the longitudinal length of each first portion of auxiliary notch and of the longitudinal length of the corresponding second portion of auxiliary notch is between 10% and 50% of the notch distance between two adjacent tab notches.

Preferably, the sum of the longitudinal length of each first portion of auxiliary notch and of the longitudinal length of the corresponding second portion of auxiliary notch is between 10% and 40% of the notch distance between two adjacent tab notches.

Preferably, the transversely inner ends of the tab notches are aligned with each other along a straight line.

Preferably, this straight line extends in a longitudinal direction.

Preferably, cutting a plurality of auxiliary notches comprises cutting auxiliary notches passing through the transversely inner end of the corresponding tab notches.

Preferably, each auxiliary notch passes through a transversely inner end of a corresponding tab notch.

Preferably, cutting a plurality of tab notches comprises directing a laser beam onto the electrode sheet.

Preferably, directing a laser beam onto the electrode sheet comprises transporting the electrode sheet along a transport direction and moving said laser beam relative to the electrode sheet.

Preferably, the electrode sheet is transported along a longitudinal direction.

Preferably, directing a laser beam onto the electrode sheet comprises transporting the electrode sheet along a transport direction and moving said laser beam relative to the electrode sheet.

Preferably, cutting a plurality of auxiliary notches comprises directing a laser beam onto the electrode sheet.

Preferably, cutting a plurality of auxiliary notches is implemented during the transport of the electrode sheet along the transport direction.

Preferably, cutting a plurality of tab notches and cutting a plurality of auxiliary notches is implemented with the same laser beam.

Preferably, reducing the thickness of the electrode sheet is implemented substantially at the same time as cutting a plurality of tabs.

Further characteristics and advantages of the present invention will become clearer from the following detailed description of a preferred embodiment thereof, with reference to the appended drawings and provided by way of indicative and non-limiting example, wherein:
- Figure 1 is a frontal schematic view of a portion of electrode for electrochemical cells in accordance with the present invention;
- Figures 2 to 4 are frontal schematic views of possible alternative embodiments of the electrode in figure 1;
- Figure 5 is a schematic view of a device capable of implementing a method for forming an electrode for electrochemical cells in accordance with the present invention; and
- Figure 6 is a schematic view of an implementation step of a method for forming an electrode for electrochemical cells in accordance with the present invention.

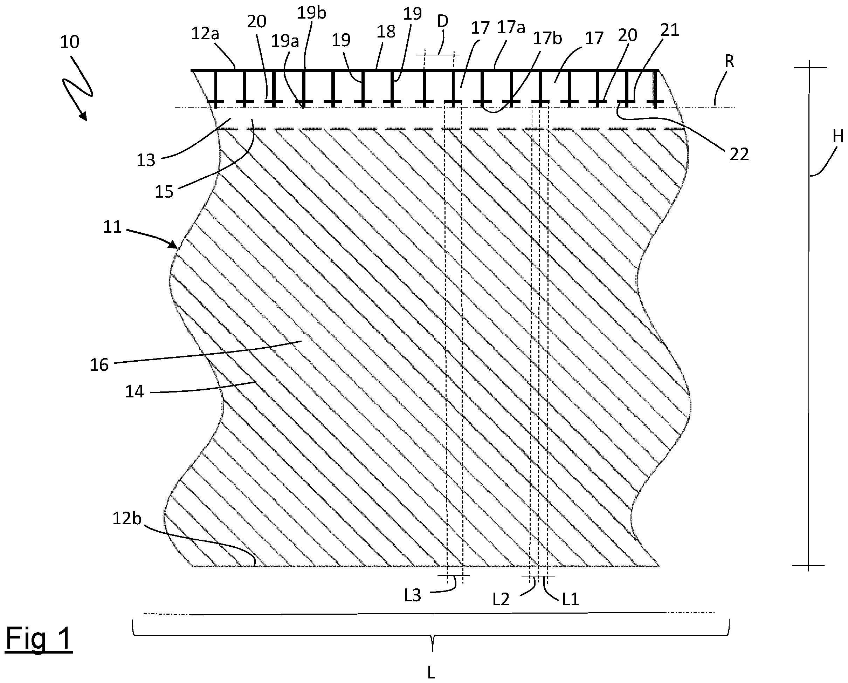

An electrode for electrochemical cells in accordance with the present invention has been indicated by reference number 10 in figure 1.

The electrode 10 can be used to make a cathode or an anode of an electrochemical cell.

The electrode 10 comprises an electrode sheet 11 having a thickness between 3 microns and 500 microns. The electrode sheet 11 has a length L between 1 metre and 50 metres, preferably between 2 metres and 20 metres, for example of about 6 metres. The electrode sheet 11 has a height H that typically depends on the height of the electrochemical cell to be made. The height H of the electrode sheet 11 may, for example, be approximately equal to the height of the electrochemical cell to be made or it may be equal to approximately twice the height of the electrochemical cell to be made. By way of example, the height H of the electrode sheet can be between 3 centimetres and 30 centimetres, preferably between 4 centimetres and 20 centimetres, for example of about 10 centimetres.

The electrode sheet 11 comprises opposite longitudinal free edges 12a, 12b which extend substantially over the entire length of the electrode sheet 11 and which are spaced from each other by said height H of the electrode sheet 11.

The electrode sheet 11 comprises a current collector 13 in the form of a sheet which may be a metal sheet or an alloy sheet; the metal sheet may comprise copper, titanium, aluminium, platinum, iridium, ruthenium, nickel, tungsten, tantalum, gold or silver, and the alloy sheet may comprise stainless steel or an alloy including at least one of the following elements: copper, titanium, aluminium, platinum, iridium, ruthenium, nickel, tungsten, tantalum, gold or silver.

The electrode sheet 11 also comprises an active material for electrodes 14 applied to one or both surfaces of the current collector 13.

The active material for electrodes 14 may be an anodic or cathodic material and may comprise, in the case of anodic material, graphite or other carbonaceous materials or silicon-based materials and, in the case of cathodic material, lithium oxide, nickel, manganese, cobalt, aluminium or lithium and iron phosphate-based materials.

As schematically illustrated in figure 1, the active material for electrodes 14 only partially covers the current collector 13.

In preferred embodiments of the invention, the electrode sheet 11 comprises at least a first portion 15 which does not have the active material for electrodes 14 and a second portion 16 which has the active material for electrodes 14. The first portion of free edge 15 and the second portion of free edge 16 extend longitudinally substantially over the entire length L of the electrode sheet 11.

In the embodiment illustrated in figure 1, there is provided only a first portion 15 of electrode sheet 11 that does not have the active material for electrodes 14. In other embodiments not illustrated, it may be provided for two first portions 15 transversely opposite each other and separated from the second portion 16.

The first portion 15 extends transversely from a free edge 12a towards the other free edge 12b without, however, reaching said other free edge 12b. The extension in transverse direction of the first portion 15 is smaller than the transverse extension of the second portion 16 of electrode sheet 11.

The electrode sheet 11 comprises a plurality of tabs 17 placed in the first electrode portion 15.

The tabs 17 are cut from tab notches 19. The tab notches 19 are through incisions in the electrode sheet 11.

The tab notches 19 extend transversely from the free edge 12a towards the second portion 16 without, however, reaching the second portion 16 of electrode sheet 11.

The tab notches 19 follow one another longitudinally along the electrode sheet 11.

The distance between two longitudinally consecutive tab notches 19 defines a notch distance D.

All notch distances D are equal to each other.

Each tab 17 is delimited in a transverse direction by an upper edge 18 and longitudinally by two adjacent tab notches 19. The upper edge 18 is substantially aligned with the free edge 12a of the electrode sheet 11 and the tab notches 19 extend in a transverse direction from the upper edge 18.

The upper edge 18 of each tab 17 defines a transversely outer end 17a of the tab 17 and the point of the tab notches 19 transversely more distal from the upper edge 18 defines a transversely inner end 17b of the tab 17. The point of the tab notches 19 transversely more distal from the upper edge 18 also defines a transversely inner end 19a of the tab notches 19. The upper edge 18 of each tab 17 defines, at each tab notch 17, a transversely outer end 19b for the tab notch 17.

As illustrated in figure 1, the transversely inner ends 19a of the tab notches 19 are aligned with each other along a straight line R. This straight line R is preferably parallel to the free edge 12a of the electrode sheet 11. The line R is completely contained in the first portion 15 of electrode sheet 11, i.e. the portion of electrode sheet 11 that does not have the active material for electrodes 14.

In the preferred embodiment of the invention, a tab notch 19 simultaneously defines both a second tab notch 19 of a first tab 17 and the first tab notch 19 of a second tab 19 immediately adjacent to said first tab 17. Each tab 17 is separated from an immediately preceding and consecutive tab 17 by a distance much smaller than the width in the longitudinal direction of the tab 17. In other words, the thickness in the longitudinal direction of a tab notch 19 is much smaller than the distance in the longitudinal direction between two adjacent tab notches 19. The thicknesses in the longitudinal direction of the tab notches 19 are all equal to each other.

The electrode 10 also comprises a plurality of auxiliary notches 20 obtained on the electrode sheet 11 in the first portion 15 of electrode sheet 11.

Each auxiliary notch 20 extends in the longitudinal direction and contacts a single tab notch 19 between the transversely outer end 19b and the transversely inner end 19a of the tab notch 19.

On all the tab notches 19 there is an auxiliary notch 20.

The thickness in the transverse direction of the auxiliary notches 20 is much smaller than the distance in the longitudinal direction between two adjacent tab notches 19.

The thickness in the transverse direction of the auxiliary notches 20 is essentially equal to the thickness in the longitudinal direction of the tab notches 19.

The thicknesses in the transverse direction of the auxiliary notches 20 are all equal to each other.

In the embodiment example in figure 1, the auxiliary notches 20 are placed astride respective tab notches 19.

Each auxiliary notch 20 comprises a first portion 21 and a second portion 22. The first portion 21 extends in a first longitudinal direction from a respective tab notch 19 towards an adjacent tab notch 19. The second portion 22 extends in a second longitudinal direction, opposite to the first longitudinal direction, from a respective tab notch 19 towards an adjacent tab notch 19.

The first portion 21 and the second portion 22 of each auxiliary notch 20 are aligned with each other and consecutive in the longitudinal direction.

All the auxiliary notches 20 are aligned with each other along a longitudinal direction parallel to the free edge 12a of the electrode sheet 11.

All the auxiliary notches 20 are placed between the transverse inner end 19a and the transverse outer end 19b of the tab notches 19. All the auxiliary notches 20 are closer to the transverse inner end 19a and further away from the transverse outer end 19b of the tab notches 19.

All the auxiliary notches 20 are transversely placed between the straight line R (with which the transversely inner ends 19a of the tab notches 19 are aligned) and the free edge 12a of the electrode sheet 11.

Each first portion 21 of auxiliary notch 20 has a longitudinal length L1, measured in a first longitudinal direction from a corresponding tab notch 19 towards an adjacent tab notch, between 10% and 45% of the corresponding notch distance D, preferably between 10% and 30% of the corresponding notch distance D, for example of 20% of the corresponding notch distance D.

All the first portions 21 of auxiliary notch 20 have equal longitudinal length L1.

Each second portion 22 of the auxiliary notch 20 has a longitudinal length L2, measured in a second longitudinal direction (opposite to the first longitudinal direction) from a corresponding tab notch 19 towards an adjacent tab notch, between 10% and 45% of the corresponding notch distance D, preferably between 10% and 30% of the corresponding notch distance D, for example of 20% of the corresponding notch distance D.

All the second portions 21 of auxiliary notch 20 have equal longitudinal length L2.

The sum of the longitudinal lengths L1, L2 of the first portion 21 and of the second portion 22 of each auxiliary notch 20 is between 20% and 60% of a notch distance D, preferably between 20% and 50% of the notch distance D, for example of 40% of the notch distance D.

The sum of the longitudinal lengths L1, L2 of the first portion 21 and of the second portion 22 of each auxiliary notch 20 defines the longitudinal length L3 of the auxiliary notch 20.

The longitudinal length L1 of the first portion 21 of auxiliary notch 20 is equal to the longitudinal length L2 of the second portion 22 of auxiliary notch 20.

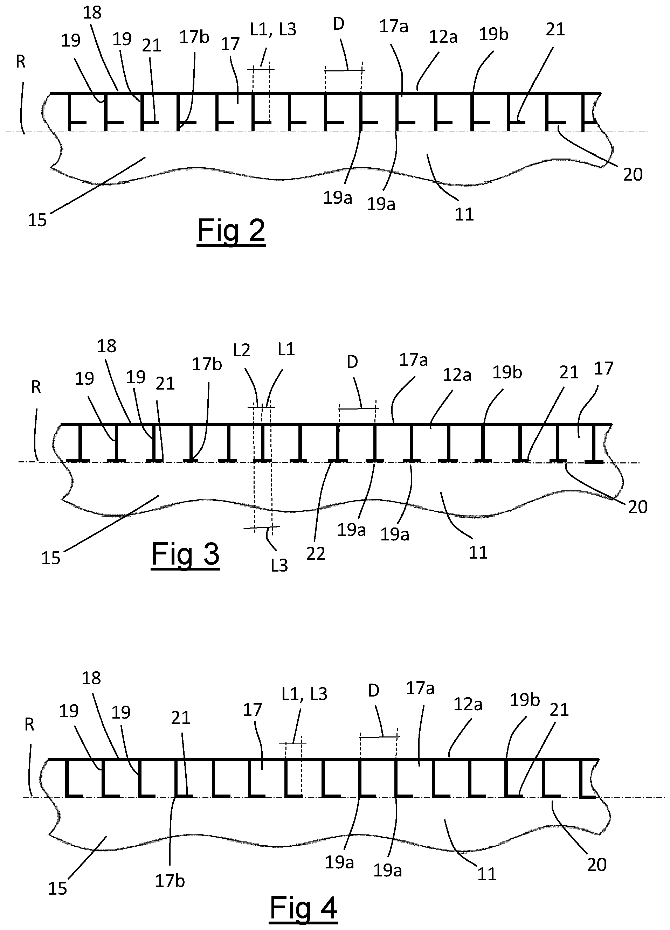

In the embodiment example in figure 2, the auxiliary notches 20 only extend between a tab notch 19 and the successive adjacent tab notch 19 along a first longitudinal direction.

Each auxiliary notch 20 comprises a single first portion 21. The first portion 21 extends in a first longitudinal direction from a respective tab notch 19 towards an adjacent tab notch 19.

All the auxiliary notches 20 are aligned with each other along a longitudinal direction parallel to the free edge 12a of the electrode sheet 11.

All the auxiliary notches 20 are placed between the transverse inner end 19a and the transverse outer end 19b of the tab notches 19. All the auxiliary notches 20 are closer to the transverse inner end 19a and further away from the transverse outer end 19b of the tab notches 19.

All the auxiliary notches 20 are transversely placed between the straight line R (with which the transversely inner ends 19a of the tab notches 19 are aligned) and the free edge 12a of the electrode sheet 11.

Each first portion 21 of auxiliary notch 20 has a longitudinal length L1, measured in a first longitudinal direction from a corresponding tab notch 19 towards an adjacent tab notch, between 10% and 80% of the corresponding notch distance D, preferably between 20% and 70% of the corresponding notch distance D, for example of 40% of the corresponding notch distance D.

All the first portions 21 of auxiliary notch 20 have equal longitudinal length L1.

The longitudinal length L1 of the first portion 21 of each auxiliary notch 20 defines the longitudinal length L3 of auxiliary notch 20.

In the embodiment example in figure 3, the auxiliary notches 20 are placed astride respective tab notches 19.

Each auxiliary notch 20 comprises a first portion 21 and a second portion 22. The first portion 21 extends in a first longitudinal direction from a respective tab notch 19 towards an adjacent tab notch 19. The second portion 22 extends in a second longitudinal direction, opposite to the first longitudinal direction, from a respective tab notch 19 towards an adjacent tab notch 19.

The first portion 21 and the second portion 22 of each auxiliary notch 20 are aligned with each other and consecutive in the longitudinal direction.

All the auxiliary notches 20 are aligned with each other along a longitudinal direction parallel to the free edge 12a of the electrode sheet 11.

All the auxiliary notches 20 are placed at the transverse inner end 19a of the tab notches 19. All the auxiliary notches 20 pass through the transverse inner end 19a of a corresponding tab notch 19.

All the auxiliary notches 20 are aligned with the straight line R (with which the transversely inner ends 19a of the tab notches 19 are aligned).

Each first portion 21 of auxiliary notch 20 has a longitudinal length L1, measured in a first longitudinal direction from a corresponding tab notch 19 towards an adjacent tab notch, between 10% and 45% of the corresponding notch distance D, preferably between 10% and 30% of the corresponding notch distance D, for example of 20% of the corresponding notch distance D.

All the first portions 21 of auxiliary notch 20 have equal longitudinal length L1.

Each second portion 22 of the auxiliary notch 20 has a longitudinal length L2, measured in a second longitudinal direction (opposite to the first longitudinal direction) from a corresponding tab notch 19 towards an adjacent tab notch, between 10% and 45% of the corresponding notch distance D, preferably between 10% and 30% of the corresponding notch distance D, for example of 20% of the corresponding notch distance D.

All the second portions 21 of auxiliary notch 20 have equal longitudinal length L2.

The sum of the longitudinal lengths L1, L2 of the first portion 21 and of the second portion 22 of each auxiliary notch 20 is between 20% and 60% of a notch distance D, preferably between 20% and 50% of the notch distance D, for example of 40% of the notch distance D.

The sum of the longitudinal lengths L1, L2 of the first portion 21 and of the second portion 22 of each auxiliary notch 20 defines the longitudinal length L3 of the auxiliary notch 20.

The longitudinal length L1 of the first portion 21 of auxiliary notch 20 is equal to the longitudinal length L2 of the second portion 22 of auxiliary notch 20.

In the embodiment example in figure 4, the auxiliary notches 20 only extend between a tab notch 19 and the successive adjacent tab notch 19 along a first longitudinal direction.

Each auxiliary notch 20 comprises a single first portion 21. The first portion 21 extends in a first longitudinal direction from a respective tab notch 19 towards an adjacent tab notch 19.

All the auxiliary notches 20 are aligned with each other along a longitudinal direction parallel to the free edge 12a of the electrode sheet 11.

All the auxiliary notches 20 are placed at the transverse inner end 19a of the tab notches 19. All the auxiliary notches 20 pass through the transverse inner end 19a of a corresponding tab notch 19.

All the auxiliary notches 20 are aligned with the straight line R (with which the transversely inner ends 19a of the tab notches 19 are aligned).

Each first portion 21 of auxiliary notch 20 has a longitudinal length L1, measured in a first longitudinal direction from a corresponding tab notch 19 towards an adjacent tab notch, between 10% and 80% of the corresponding notch distance D, preferably between 20% and 70% of the corresponding notch distance D, for example of 40% of the corresponding notch distance D.

All the first portions 21 of auxiliary notch 20 have equal longitudinal length L1.

The longitudinal length L1 of the first portion 21 of each auxiliary notch 20 defines the longitudinal length L3 of auxiliary notch 20.

A method for producing an electrode 10 according to the present invention provides for applying the active material for electrodes 14 to a portion of the current collector 13 or to the entire current collector 13.

In the case where the active material for electrodes 14 is applied to only a portion of the current collector 13, that portion is defined by the second portion 16 of the electrode sheet 11.

In the case where the active material for electrodes 14 is applied to the entire current collector 13, this operation is followed by an operation of ablation of the active material for electrodes 14 from a portion of current collector 13, so as to obtain said second portion 16 of the electrode sheet 11.

In both cases, on the electrode sheet 11 a first portion 15 is obtained which extends transversely from the free edge 12a of the electrode sheet 11 and which is not coated with active material for electrodes 14.

These operations can be performed on only one surface of the current collector 13 or on both surfaces of the current collector 13.

The electrode sheet 11 thus obtained can be wound on itself to form a roll of electrode sheet 23 for temporary storage or for direct use.

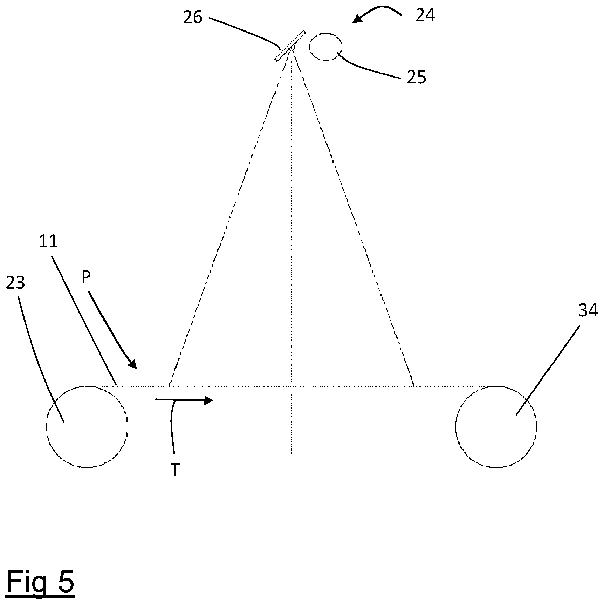

The electrode sheet 11 is unwound from the roll of electrode sheet 23 to be fed along a transport path P in a transport direction T (schematised in figure 5).

Above the transport path P there is provided a laser device 24 which comprises a laser oscillator 25 emitting a laser beam and a galvanometric scanner 26 configured to move the focal point of the laser beam and focus it at a desired position along the transport path P and on the electrode sheet 11. The galvanometric scanner 26 is a device configured to deviate the laser beam along two mutually orthogonal dimensions contained in the plane defined by the electrode sheet 11 placed below the laser device 24. The galvanometric scanner 26 may comprise two mirrors mounted on a galvanometer in such a way that they rotate on mutually skewed and preferably perpendicular axes.

When the electrode sheet 11 travels along the transport path P in the transport direction T, the laser device 24 is activated to cut the plurality of tab notches 19 and the plurality of auxiliary notches 20.

The operations for cutting plurality of tab notches 19 and the plurality of auxiliary notches 20 are implemented "on the fly", i.e. while the electrode sheet 11 is moving along the transport direction T.

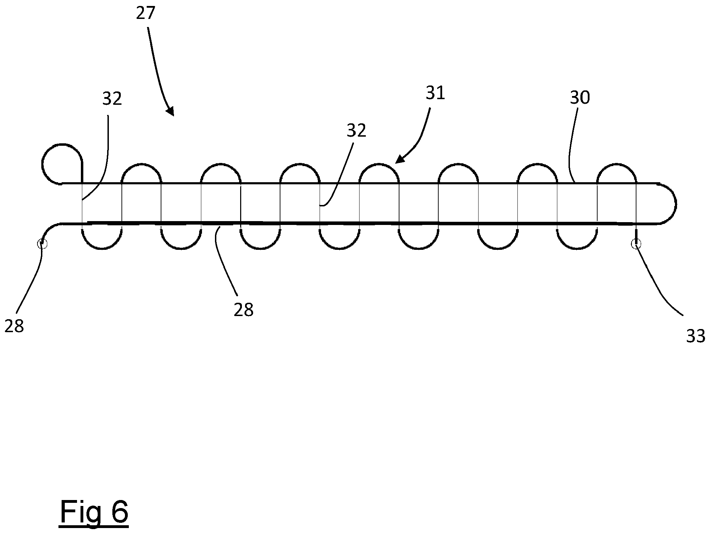

In the preferred embodiment of the invention, the combined motion of the electrode sheet 11 (moving in rectilinear motion) and of the laser beam (moving along two mutually orthogonal dimensions contained in the plane defined by the electrode sheet 11) results in a processing trajectory 27 of the focus point of the laser beam on the electrode sheet 11. This processing trajectory 27 is schematised in figure 6.

The processing trajectory 27 travelled by the focal point of the laser beam on the electrode sheet 11 is repeated substantially equal to itself for a sufficient number of times to cut the plurality of tab notches 19 and the plurality of auxiliary notches 20 for a desired length along the electrode sheet 11.

In the preferred embodiment of the invention, said processing trajectory 27 starts from an initial point 28, follows a first straight section 29, makes a U-bend, follows a second straight section 30 returning towards the initial point 28, travels a further bend and then follows a serpentine path 31 (composed of curved and straight sections 32) placed astride the first 29 and the second straight section 30 up to a final point 33. The final point 33 of each processing trajectory 27 is made to coincide with the initial point 28 of the successive processing trajectory 27.

The first straight section 29 of the processing path 27 is made to coincide with a longitudinal alignment direction of the auxiliary notches 20, the second straight section 30 of the processing path 27 is made to coincide with the free edge 12a of the electrode sheet 11, and the straight sections 32 of the serpentine path 31 are made to coincide with the tab notches 19 to be cut.

By modulating the power of the laser oscillator 25 between a minimum power equal to zero and a maximum power, it is possible to cut the tab notches 19 and the auxiliary notches 20.

In particular, in order to cut the tab notches 19, the power of the laser oscillator 25 is set to a first power capable of cutting through notches in the electrode sheet 11. This first power is used when the focal point of the laser beam travels along the straight sections 32 of the serpentine 31 of the processing trajectory 27.

To cut the auxiliary notches 20, the power of the laser oscillator 25 is set to the first power capable of cutting through notches in the electrode sheet 11. The first power is used when the focal point of the laser beam travels along the first straight section 29 of the processing trajectory 27 and at the auxiliary notches 20 to be cut.

When the focal point of the laser beam travels along the first straight section 29 of the processing trajectory 27 and at spaces dividing between the auxiliary notches 20 to be cut (i.e. at portions of the electrode sheet not affected by the auxiliary notches 20), the power of the laser oscillator 25 is set to a second, substantially zero power.

When the tab notches 19 and the auxiliary notches 20 have been cut on the portion of electrode sheet 11 being processed, the electrode sheet continues to travel along the transport path P in the transport direction T in order to be wound and form a further roll of electrode sheet 34.

## Claims

1. Method for forming an electrode for electrochemical cells comprising:
arranging an electrode sheet (11) having a thickness, a length (L) and a height (H), wherein the length (L) is measured along a longitudinal direction, the height (H) is measured along a transverse direction and the thickness is measured along a direction perpendicular to the longitudinal direction and the transverse direction, said electrode sheet (11) having a longitudinal free edge (12a);
cutting a plurality of tab notches (19) on said electrode sheet (11) in a first portion (15) of electrode sheet (11) extending transversely from said free edge (12a), wherein each tab notch (11) extends from a transversely outer end (19b) to a transversely inner end (19a);
cutting a plurality of auxiliary notches (20) on said electrode sheet (11) in said first portion (15) of said electrode sheet (11), wherein each auxiliary notch (20) extends in a longitudinal direction and contacts a single tab notch (19) between the transversely outer end (19b) and the transversely inner end (19a) of the tab notch (19).

2. Method according to claim 1, wherein cutting a plurality of tab notches (19) comprises providing a plurality of tab notches (19) parallel to each other and spaced apart by respective notch distances (D); cutting a plurality of auxiliary notches (20) comprises providing each auxiliary notch (20) with a first portion (21) extending from a corresponding tab notch (19) towards a first adjacent tab notch (19).

3. Method according to claim 2, wherein each first portion (21) of auxiliary notch has a longitudinal length (L1), measured from a corresponding tab notch (19) towards the first adjacent tab notch (19), between 10% and 90% of the corresponding notch distance (D).

4. Method according to claim 2 or 3, wherein cutting a plurality of auxiliary notches (20) comprises providing each auxiliary notch (20) with additionally a second portion (22) extending from a corresponding tab notch (19) towards a second adjacent tab notch (19).

5. Method according to claim 4, wherein each second tab portion (22) has a longitudinal length (L2), measured from a corresponding tab notch (19) towards the second adjacent tab notch (19), between 10% and 49% of the corresponding notch distance (D), and wherein each first auxiliary notch portion (21) has a longitudinal length (L1), measured from a corresponding tab notch (19) towards the first adjacent tab notch (19), between 10% and 49% of the corresponding notch distance (D).

6. Method according to any one of the preceding claims, wherein cutting a plurality of auxiliary notches (20) comprises providing auxiliary notches (20) passing through the transversely inner end (19a) of the corresponding tab notches (19).

7. Method according to any one of the preceding claims, wherein the transversely inner ends (19a) of the tab notches (19) are aligned with each other along a straight line (R).

8. Method according to any one of the preceding claims, wherein cutting a plurality of tab notches (19) comprises directing a laser beam onto the electrode sheet (11).

9. Method according to claims 8 and 10, wherein cutting a plurality of tab notches (19) and cutting a plurality of auxiliary notches (20) is implemented with the same laser beam.

10. Electrode (10) for electrochemical cells comprising:
an electrode sheet (11) having a thickness, a length (L) and a height (H), wherein the length (L) is measured along a longitudinal direction, the height (H) is measured along a transverse direction and the thickness is measured along a direction perpendicular to the longitudinal direction and the transverse direction, said electrode sheet (11) having a longitudinal free edge (12a);
a plurality of tab notches (19) on said electrode sheet (11) in a first portion (15) of electrode sheet (11) extending transversely from said free edge (12a), wherein each tab notch (11) extends from a transversely outer end (19b) to a transversely inner end (19a);
a plurality of auxiliary notches (20) on said electrode sheet (11) in said first portion (15) of said electrode sheet (11), wherein each auxiliary notch (20) extends in a longitudinal direction and contacts a single tab notch (19) between the transversely outer end (19b) and the transversely inner end (19a) of the tab notch (19).

11. Electrode according to claim 10, wherein the tab notches (19) are parallel to each other and spaced apart by respective notch distances (D); each auxiliary notch (20) comprising a first portion (21) extending from a corresponding tab notch (19) towards a first adjacent tab notch (19).

12. Electrode according to claim 11, wherein each first portion (21) of auxiliary notch has a longitudinal length (L1), measured from a corresponding tab notch (19) towards the first adjacent tab notch (19), between 10% and 90% of the corresponding notch distance (D).

13. Electrode according to claim 11 or 12, wherein each auxiliary notch (20) further comprises a second portion (22) extending from a corresponding tab notch (19) towards a second adjacent tab notch (19).

14. Electrode according to claim 13, wherein each second tab portion (22) has a longitudinal length (L2), measured from a corresponding tab notch (19) towards the second adjacent tab notch (19), between 10% and 49% of the corresponding notch distance (D), and wherein each first auxiliary notch portion (21) has a longitudinal length (L1), measured from a corresponding tab notch (19) towards the first adjacent tab notch (19), between 10% and 49% of the corresponding notch distance (D).

15. Electrode according to claim 14, wherein each auxiliary notch (20) has a longitudinal length (L1) of the first portion (21) equal to the longitudinal length (L2) of the second portion (22).
